# EUROPEAN PATENT SPECIFICATION

(11) **EP 1 565 903 B1**
(45) Date of publication and mention of the grant of the patent: **29.03.2006**
(21) Application number: 03758534.6
(22) Date of filing: 29.10.2003
(51) Int. Cl.: G09G 3/34, G02F 1/167

(54) **ELECTROPHORETIC DISPLAY PANEL**
ELEKTROPHORETISCHE ANZEIGETAFEL
ECRAN D'AFFICHAGE PAR ELECTROPHORESE

(30) Priority: 22.11.2002 EP 02079946
(43) Date of publication of application: 24.08.2005
(73) Proprietor: Koninklijke Philips Electronics, N.V., 5621 BA Eindhoven (NL)
(72) Inventor: ZHOU, Guofu, NL-5656 AA Eindhoven (NL); JOHNSON, Mark, T., NL-5656 AA Eindhoven (NL); DUINE, Peter, A., NL-5656 AA Eindhoven (NL)
(74) Representative: Rolfes, Johannes Gerardus Albertus
(86) International application number: PCT/IB2003/004912
(87) International publication number: WO 2004/049291

(56) References cited:
- WO-A-03/079324
- US-A- 4 041 481
- US-A1- 2002 005 832
- T. BERT, H. DE SMET, F. BRUYNEEL, J. DOUTRELOIGNE, E. SCHROTEN, A.A.J. KETLAARS, G. HADZIIOANNOU: "Passive Matrix Addressing of Electrophoretic Image Display" PROCEEDINGS OF EURODISPLAY 2002, [Online] 1 - 4 October 2002, pages 251-254, XP002273758 Nice Retrieved from the Internet: <URL:www.elis.ugent.be/ELISgroups/tfcg/ publi/eurodisplay2002_s14-1.pdf> [retrieved on 2004-03-17]

## Description

The invention relates to an electrophoretic display panel, for displaying a picture, comprising:
- an electrophoretic medium comprising charged particles;
- a plurality of picture elements;
- a first and a second electrode associated with each picture element for receiving a potential difference; and
- drive means,
the charged particles being able to occupy extreme positions near the electrodes and intermediate positions in between the electrodes,
the drive means being arranged for controlling the potential difference of each picture element
- to be a preset potential difference having a sequence of preset values of alternating sign and having a predetermined duration, each preset value having a sub-duration to represent an energy sufficient to release particles present in one of said extreme positions from their position but insufficient to enable particles to reach the other one of the extreme positions, and subsequently
- to be a picture potential difference having a value and an actual duration in the range between a smallest duration and a largest duration, for displaying the picture by bringing the particles into one of said positions.

An embodiment of the electrophoretic display panel of the type mentioned in the opening paragraph is described in non-prepublished European Patent application 02077017.8 (PHNL020441).

In electrophoretic display panels in general, the picture elements have, during the display of the picture, appearances determined by the positions of the charged particles between the electrodes. The positions of the particles depend, however, not only on the potential differences, but also on the history of the potential differences. As a result the picture being displayed based on image information differs significantly from a picture being an exact representation of the image information. Therefore, the picture being displayed has a relatively low picture quality. The dependency on the history is reduced in the described electrophoretic display panel by the application of the preset potential differences for a predetermined duration before the application of the picture potential differences of picture elements having the largest duration of those differences. As the dependency on the history is a decreasing function of the durations of the preset potential differences, the picture quality could be increased by increasing the durations of the preset potential differences. However, as the interval intended to be available for controlling both the preset potential differences and the picture potential differences is in general constant and in the range between 100 ms and 200 ms, the interval available for the preset potential differences and the picture potential differences is a rather short and the dependency of the appearances of the picture elements on the history is still non-negligible. As a result, the picture being displayed still has a rather poor picture quality.

It is a drawback of the described display panel that it is difficult to obtain therewith a relatively high picture quality when the interval available for controlling both the preset potential differences and the picture potential differences is constant and in the range between 100 ms and 200 ms.

It is an object of the invention to provide a display panel of the kind mentioned in the opening paragraph which is able to provide a relatively high picture quality even when the interval available for controlling both the preset potential differences and the picture potential differences is constant and in the range between 100 ms and 200 ms.

The object is thereby achieved that the drive means are further arranged for controlling for each picture element of at least a number of the picture elements having smaller durations of the picture potential differences than the largest duration, the preset potential difference to have an additional duration, which is chosen in a range from larger than zero to equal to a difference between the largest duration and the actual duration of the picture potential difference.

The invention is based on the following insight. In general the durations of the picture potential differences vary between a smallest duration and a largest duration of the picture potential differences. Picture elements of which the positions of the particles during the application of the picture potential differences have changed the least, have the smallest duration of the picture potential differences. Picture elements of which the positions of the particles during the application of the picture potential differences have changed the most, have the largest duration of the picture potential differences. A subset of the picture elements is formed by at least a number of the picture elements having smaller durations of the picture potential differences than the largest duration. The subset contains one picture element at the least and the total number of picture elements at the most. If, for each picture element of the subset the preset potential difference has an additional duration, the dependency of the appearance on the history of the picture elements of the subset is further decreased. The additional duration is positive and smaller than or equal to the difference between the largest duration of the picture potential differences and the actual duration. As a result the picture quality is improved.
The object could also be achieved by the application of relatively large potential differences compared to potential differences of 15 Volts, because relatively large potential differences applied for relatively small durations have the same effect on the appearances as relatively small potential differences applied for relatively large durations. However, the display panel according to the present invention has the advantage that the object is achieved without the need of such relatively large potential differences. Therefore, standard driving electronics may be used.

It has been observed that for relatively small changes in appearance of the picture element, provided by a relatively small duration of the picture potential difference, the dependency of the appearance on the history is relatively large compared to relatively large changes in appearance of the picture element, provided by a relatively large duration of the picture potential difference. Therefore, in an embodiment the drive means are further arranged for controlling the respective additional duration to be a decreasing function of the respective actual duration of the picture potential difference. Then, for each picture element of the subset, a smaller duration of the picture potential difference implies a larger additional duration of the preset potential difference. As a result, for each picture element of the subset the dependency of the appearance on the history is decreased and the picture quality is further improved. It is favorable, if, furthermore, the drive means are further arranged for controlling the respective additional duration to be substantially equal to the difference between the largest duration of the picture potential differences and the respective actual duration of the picture potential difference. Then, for each picture element of the subset the additional duration of the preset potential difference is substantially equal to the largest duration available, resulting in a still further improved picture quality.

In another embodiment the drive means are further arranged for controlling the preset values in the sequence to be subsequently of opposite value. Then the DC component and the visibility of the preset potential differences of the display panel are relatively small. If, furthermore, the drive means are further arranged for generating an even number of preset values, the DC component and the visibility of the preset potential differences of the display panel are further decreased.

In another embodiment the picture elements are interconnected in two or more groups whereby preset potential differences having a different polarity are supplied to different groups. Then the perceptual appearance will hardly be effected, as the eye integrates the short brightness fluctuations.

In another embodiment for each picture element the first electrode comprises a data electrode and the second electrode comprises a selection electrode and the drive means further comprise first sub drive means for applying a selection potential to the selection electrode and second sub drive means for applying a data potential to the data electrode. Then the electrodes are arranged to form a passive matrix display.

In another embodiment the first electrode of each picture element is being coupled to a data electrode via a switching element, the switching element being controlled by a selection electrode, and the drive means further comprise first sub drive means for applying selection potentials to the selection electrodes and second sub drive means for applying data potentials to the data electrodes. Then the display panel is provided with an active matrix addressing to provide the data potentials to the electrodes of the picture elements.

In a variation of the last two mentioned embodiments the selection electrodes associated with picture elements are interconnected in two groups, and the drive means are further arranged for generating a first preset potential difference having a first polarity to the first group and a second preset potential difference having a second polarity opposite to the first polarity to the second group. Then the picture elements are interconnected in two or more groups whereby preset potential differences having a different polarity are supplied to the different parts of the screen. For example, when in a single frame addressing period the preset potential differences are applied with a positive polarity to all even rows and a negative polarity to all odd rows adjacent rows of the display panel will appear alternately brighter and darker and in the subsequent frame addressing period the positive and negative polarities of the preset potential differences are inverted, the perceptual appearance will then hardly be effected, as the eye integrates these short brightness fluctuations both across the display (spatial integration) and over subsequent frames (temporal averaging). This principle is similar to the line inversion principle in methods for driving liquid crystal displays with reduced flicker. In a further variation it is possible to interconnect the data electrodes associated with picture elements in two groups, whereby using a similar approach a column inversion principle may be realized. In still a further variation, both selection and data electrodes associated with picture elements are interconnected in two groups, whereby using a similar approach a dot inversion principle may be realized.

It is also favorably, if, in each aforementioned embodiment, each picture element having a duration of the actual picture potential difference smaller than the largest duration of the picture potential differences, is one of the number of the picture elements. Then, for each of those picture elements, the dependency of the appearance on the history is decreased.

These and other aspects of the display panel of the invention will be further elucidated and described with reference to the drawings, in which:
Figure 1 shows diagrammatically a front view of an embodiment of the display panel;
Figure 2 shows diagrammatically a cross-sectional view along II-II in Figure 1;
Figure 3A shows diagrammatically the potential difference as a function of time for a picture element for which the picture potential difference has the largest duration of the picture potential differences for the embodiment;
Figure 3B shows diagrammatically the potential difference as a function of time for a picture element of the subset of the picture elements for the embodiment;
Figure 3C shows diagrammatically the potential difference as a function of time for another picture element of the subset of the picture elements for the embodiment; and
Figure 4 shows in a graphical form three examples of the relation between the actual duration of the picture potential differences, denoted as symbol X, and the additional duration of the preset potential differences, denoted as symbol Y, for a variation of the embodiment.

In all the Figures corresponding parts are referenced to by the same reference numerals.

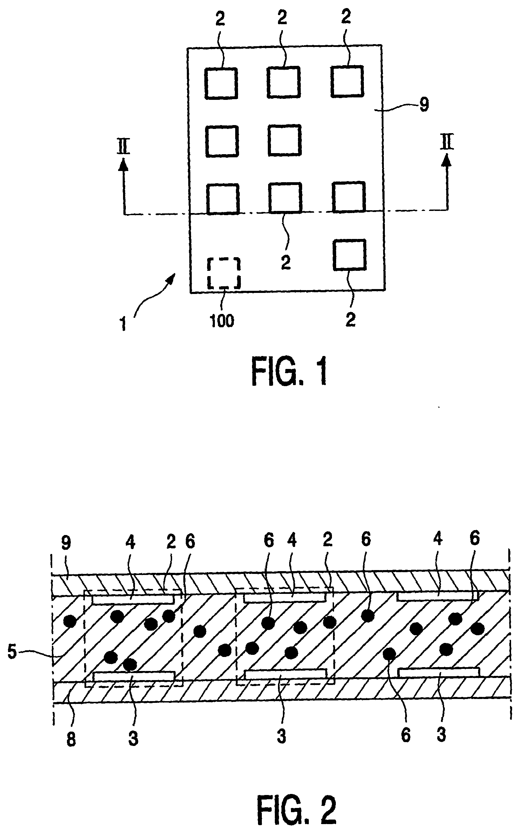

Figures 1 and 2 show the embodiment of the display panel 1 having a first substrate 8, a second opposed substrate 9 and a plurality of picture elements 2. Preferably, the picture elements 2 are arranged along substantially straight lines in a two-dimensional structure. Other arrangements of the picture elements 2 are alternatively possible, e.g. a honeycomb arrangement. An electrophoretic medium 5, having charged particles 6, is present between the substrates 8,9. A first and a second electrode 3,4 are associated with each picture element 2. The electrodes 3,4 are able to receive a potential difference. In Figure 2 the first substrate 8 has for each picture element 2 a first electrode 3, and the second substrate 9 has for each picture element 2 a second electrode 4. The charged particles 6 are able to occupy extreme positions near the electrodes 3,4 and intermediate positions in between the electrodes 3,4. Each picture element 2 has an appearance determined by the position of the charged particles 6 between the electrodes 3,4. Electrophoretic media 5 are known per se from e.g. US 5,961,804, US 6,120,839 and US 6,130,774 and can e.g. be obtained from E Ink Corporation. As an example, the electrophoretic medium 5 comprises negatively charged black particles 6 in a white fluid. When the charged particles 6 are in the first extreme position, i.e. near the first electrode 3, due to a potential difference of e.g. 15 Volts, the appearance of the picture element 2 is e.g. white. When the charged particles 6 are in the second extreme position, i.e. near the second electrode 4, due to a potential difference of opposite polarity, i.e. -15 Volts, the appearance of the picture element 2 is black. When the charged particles 6 are in one of the intermediate positions, i.e. in between the electrodes 3,4, the picture element has one of the intermediate appearances, e.g. light gray, middle gray and dark gray, which are gray levels between white and black. The drive means 100 are arranged for controlling the potential difference of each picture element 2 to be a preset potential difference. The preset potential difference has a sequence of preset values and a predetermined duration. The preset values in the sequence alternate in sign. The drive means 100 are further arranged for controlling each preset value for a sub-duration to represent an energy sufficient to release particles 6 present in one of said extreme positions from their position but insufficient to enable particles 6 to reach the other one of the extreme positions. The drive means 100 are further arranged for controlling the potential difference of each picture element 2 to be picture potential difference for displaying the picture by bringing the particles 6 into one of said positions, subsequent to be a preset potential difference. The picture potential difference has a value and an actual duration in the range between a smallest duration and a largest duration of the picture potential differences. Furthermore, the drive means 100 are arranged for controlling for each picture element 2 of at least a number of the picture elements 2 having smaller durations of the picture potential differences than the largest duration, the preset potential difference to have an additional duration, which is chosen in a range from larger than zero to equal to a difference between the largest duration and the actual duration of the picture potential difference.

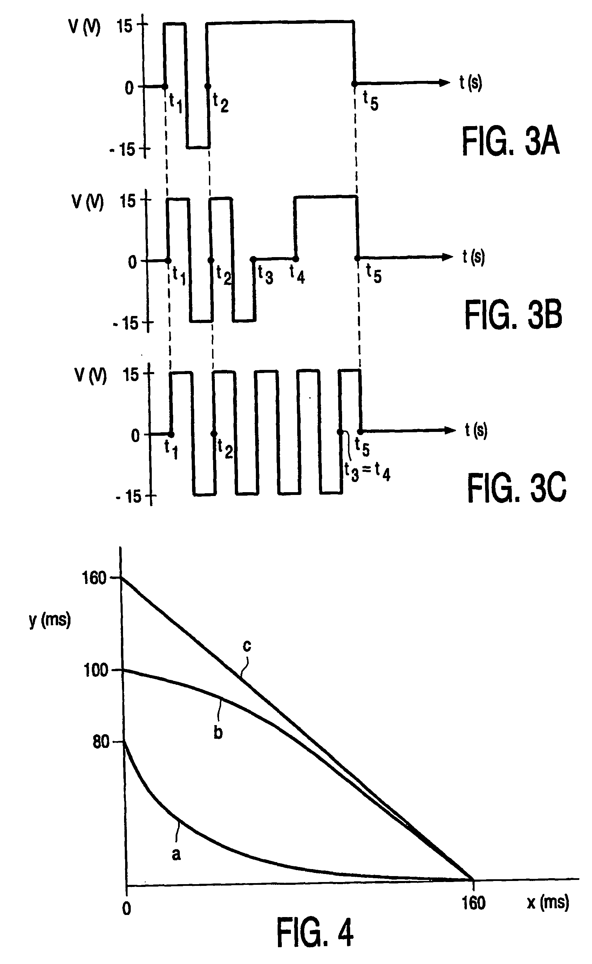

As an example, the potential difference of a picture element 2 for which the picture potential difference has the largest duration of the picture potential differences, is shown as function of time in Figure 3A. The preset potential difference is present from time t1 to time t2 and has a predetermined duration of e.g. 40 ms and has e.g. 2 preset values, each preset values being applied for a sub-duration of 20 ms, the first being 15 Volts, the second being -15 Volts. The picture potential difference is present between time t2 and time t5 and has a value of 15 Volts and an actual duration of e.g. 160 ms. The actual duration of the picture potential difference is equal to the largest duration of the picture potential differences. As a result the picture element 2 has an appearance being white, for displaying the picture.

In Figure 3B the potential difference is shown as a function of time for a particular picture element 2 of the number of the picture elements 2 having smaller durations of the picture potential differences than the largest duration. The actual duration of the picture potential difference, from time t4 to time t5, is e.g. 100 ms, which is smaller than the largest duration of the picture potential differences of 160 ms as given in Figure 3A. For the particular picture element 2 referred to in Figure 3B the preset potential difference has an additional duration, from time t2 to time t3, of e.g. 40 ms. In this example, the preset values, being 15 Volts or -15 Volts, in the sequence are subsequently of opposite value and, furthermore, the number of preset values, being 4, is even.

In Figure 3C the potential difference is shown as a function of time for an other picture element 2 of the number of the picture elements 2 having smaller durations of the picture potential differences than the largest duration. The actual duration of the picture potential differences, from time t4 to time t5, is e.g. 40 ms. For this picture element 2 the preset potential difference has an additional duration, from time t2 to time t3, where t3 is substantially equal to t4, of e.g. 120 ms.

In a variation of the embodiment, the drive means 100 are further arranged for controlling the respective additional duration to be a decreasing function of the respective actual duration of the picture potential difference. The potential differences of the picture elements 2 referred to in Figure 3B and 3C have additional durations which are an example of such a decreasing function. Figure 4 shows three other examples of such decreasing functions. The largest duration of the picture potential differences is 160 ms as given in Figure 3A. For all three decreasing functions it holds that the additional duration of the preset potential difference is equal to zero for an actual duration of the picture potential difference equal to the largest duration of the picture potential differences. The function represented by the line with label 'a' has a largest additional duration of the preset potential difference of 80 ms for an actual duration of the picture potential difference being zero. The function represented by the line with label 'b' has a largest additional duration of the preset potential difference of 100 ms for an actual duration of the picture potential difference being zero. The function represented by the straight line with label 'c' has a largest additional duration of the preset potential difference of 160 ms for an actual duration of the picture potential difference being zero. This function corresponds to a further variation of the embodiment where the drive means 100 are further arranged for controlling the respective additional duration to be substantially equal to the difference between the largest duration of the picture potential differences and the respective actual duration of the picture potential difference. The potential difference shown in Figure 3C represents an example of this embodiment.

In the examples the potential differences are chosen from three values, -15 Volts, 0 and 15 Volts. However, the values of the potential differences are not restricted to these values as other potential difference values may be applied, even different values may be applied for the preset potential differences and the picture potential differences.

It is favorable if the preset potential difference of each picture element 2 having a duration of the actual picture potential difference smaller than the largest duration, has an additional duration.

## Claims

1. An electrophoretic display panel (1), for displaying a picture, comprising:
- an electrophoretic medium (5) comprising charged particles (6),
- a plurality of picture elements (2);
- a first and a second electrode (3,4) associated with each picture element (2) for receiving a potential difference; and
- drive means,
the charged particles (6) being able to occupy extreme positions near the electrodes (3,4) and intermediate positions in between the electrodes (3,4),
the drive means being arranged for controlling the potential difference of each picture element (2)
- to be a preset potential difference having a sequence of preset values of alternating sign and having a predetermined duration, each preset value having a sub-duration to represent an energy sufficient to release particles (6) present in one of said extreme positions from their position but insufficient to enable particles (6) to reach the other one of the extreme positions, and subsequently
- to be a picture potential difference having a value and an actual duration in the range between a smallest duration and a largest duration, for displaying the picture by bringing the particles (6) into one of said positions,
**characterized in that**
the drive means are further arranged for controlling for each picture element of a number of the picture elements (2) having smaller durations of the picture potential differences than the largest duration, the preset potential difference to have an additional duration, which is chosen in a range from larger than zero to equal to a difference between the largest duration and the actual duration of the picture potential difference.

2. A display panel (1) as claimed in claim 1 **characterized in that** the drive means are further arranged for controlling the respective additional duration to be a decreasing function of the respective actual duration of the picture potential difference.

3. A display panel (1) as claimed in claim 2 **characterized in that** the drive means are further arranged for controlling the respective additional duration to be substantially equal to the difference between the largest duration of the picture potential differences and the respective actual duration of the picture potential difference.

4. A display panel (1) as claimed in claim 1 **characterized in that** the drive means are further arranged for controlling the preset values in the sequence to be subsequently of opposite value.

5. A display panel (1) as claimed in claim 4 **characterized in that** the drive means are further arranged for generating an even number of preset values.

6. A display panel (1) as claimed in claim 1 **characterized in that** the picture elements (2) are interconnected in two or more groups whereby preset potential differences having a different polarity are supplied to different groups.

7. A display panel (1) as claimed in claim 1 **characterized in that** for each picture element (2) the first electrode comprises a data electrode and the second electrode comprises a selection electrode and the drive means further comprise first sub drive means for applying a selection potential to the selection electrode and second sub drive means for applying a data potential to the data electrode.

8. A display panel (1) is claimed in claim 1 **characterized in that** the first electrode (3) of each picture element (2) is being coupled to a data electrode via a switching element, the switching element being controlled by a selection electrode, and the drive means further comprise first sub drive means for applying selection potentials to the selection electrodes and second sub drive means for applying data potentials to the data electrodes.

9. A display panel (1) as claimed in claim 7 or 8 **characterized in that** the selection electrodes or the data electrodes or both associated with picture elements (2) are interconnected in two groups, and the drive means are further arranged for generating a first preset potential difference having a first polarity to the first group and a second preset potential difference having a second polarity opposite to the first polarity to the second group.

10. A display panel (1) as claimed in claim 1,2 or 3 **characterized in that** each picture element (2) having a duration of the actual picture potential difference smaller than the largest duration of the picture potential differences, is one of the number of the picture elements.

## Patentansprüche

1. Elektrophoretische Anzeigetafel (1) zum Anzeigen eines Bildes, die Folgendes umfasst:
- ein elektrophoretisches Medium (5), das geladene Partikel (6) umfasst,
- mehrere Bildpunkte (2),
- zugehörig zu jedem Bildpunkt (2) eine erste und eine zweite Elektrode (3,4) zum Aufnehmen einer Potentialdifferenz und
- Ansteuermittel,
wobei die geladenen Partikel (6) Extrempositionen bei den Elektroden (3,4) und Zwischenpositionen zwischen den Elektroden (3,4) einnehmen können,
wobei die Ansteuermittel dazu ausgelegt sind, die Potentialdifferenz jedes Bildpunkts (2)
- auf eine Vorwahlpotentialdifferenz zu regeln, die eine Folge von Vorwahlwerten mit abwechselndem Vorzeichen und eine festgelegte Dauer aufweist, wobei jeder Vorwahlwert eine Sub-Dauer aufweist, die eine Energie darstellt, die ausreicht, um Partikel (6), die an einer der Extrempositionen vorhanden sind, aus ihrer Position zu lösen, aber nicht ausreicht, um Teilchen (6) an die jeweils andere Extremposition gelangen zu lassen, und die Potentialdifferenz anschließend
- auf eine Bildpotentialdifferenz zu regeln, die einen Wert und eine tatsächliche Dauer im Bereich zwischen einer kürzesten Dauer und einer längsten Dauer aufweist, um das Bild anzuzeigen, indem die Partikel (6) in eine der Positionen gebracht werden,
**dadurch gekennzeichnet, dass**
die Ansteuermittel ferner dazu ausgelegt sind, für jeden Bildpunkt aus einer Anzahl von Bildpunkten (2), deren Bildpotentialdifferenzen Dauern aufweisen, die kürzer als die längste Dauer sind, die Vorwahlpotentialdifferenz dergestalt zu regeln, dass sie eine zusätzliche Dauer aufweist, die aus einem Bereich ausgewählt wird, der von einer Dauer größer als null bis zu der Differenz zwischen der längsten Dauer und der tatsächlichen Dauer der Bildpotentialdifferenz reicht.

2. Anzeigetafel (1) nach Anspruch 1, **dadurch gekennzeichnet, dass** die Ansteuermittel ferner dazu ausgelegt sind, die jeweilige zusätzliche Dauer dergestalt zu regeln, dass sie eine fallende Funktion der jeweiligen tatsächlichen Dauer der Bildpotentialdifferenz ist.

3. Anzeigetafel (1) nach Anspruch 2, **dadurch gekennzeichnet, dass** die Ansteuermittel ferner dazu ausgelegt sind, die jeweilige zusätzliche Dauer dergestalt zu regeln, dass sie im Wesentlichen gleich der Differenz zwischen der längsten Dauer der Bildpotentialdifferenzen und der jeweiligen tatsächlichen Dauer der Bildpotentialdifferenz ist.

4. Anzeigetafel (1) nach Anspruch 1, **dadurch gekennzeichnet, dass** die Ansteuermittel ferner dazu ausgelegt sind, die Vorwahlwerte der Folge dergestalt zu regeln, dass sie nacheinander entgegengesetzte Werte annehmen.

5. Anzeigetafel (1) nach Anspruch 4, **dadurch gekennzeichnet, dass** die Ansteuermittel ferner dazu ausgelegt sind, eine gerade Anzahl von Vorwahlwerten zu generieren.

6. Anzeigetafel (1) nach Anspruch 1, **dadurch gekennzeichnet, dass** die Bildpunkte (2) in zwei oder mehr Gruppen zusammengeschaltet sind, wodurch an unterschiedliche Gruppen Vorwahlpotentialdifferenzen mit unterschiedlicher Polarität geliefert werden.

7. Anzeigetafel (1) nach Anspruch 1, **dadurch gekennzeichnet, dass** für jeden Bildpunkt (2) die erste Elektrode eine Datenelektrode und die zweite Elektrode eine Auswahlelektrode umfasst und die Ansteuermittel ferner erste Sub-Ansteuermittel zum Anlegen eines Auswahlpotentials an die Auswahlelektrode und zweite Sub-Ansteuermittel zum Anlegen eines Datenpotentials an die Datenelektrode umfassen.

8. Anzeigetafel (1) nach Anspruch 1, **dadurch gekennzeichnet, dass** die erste Elektrode (3) jedes Bildpunkts (2) über ein Schaltelement, welches von einer Auswahlelektrode geregelt wird, an eine Datenelektrode gekoppelt wird und die Ansteuermittel ferner erste Sub-Ansteuermittel zum Anlegen von Auswahlpotentialen an die Auswahlelektroden und zweite Sub-Ansteuermittel zum Anlegen von Datenpotentialen an die Datenelektroden umfassen.

9. Anzeigetafel (1) nach Anspruch 7 oder 8, **dadurch gekennzeichnet, dass** die den Bildpunkten (2) zugehörigen Auswahlelektroden und/oder Datenelektroden in zwei Gruppen zusammengeschaltet sind, und die Ansteuermittel sind ferner dazu ausgelegt, für die erste Gruppe eine erste Vorwahlpotentialdifferenz mit einer ersten Polarität und für die zweite Gruppe eine zweite Vorwahlpotentialdifferenz mit einer zweiten, der ersten Polarität entgegengesetzten Polarität zu generieren.

10. Anzeigetafel (1) nach Anspruch 1, 2 oder 3, **dadurch gekennzeichnet, dass** jeder Bildpunkt (2), dessen tatsächliche Bildpotentialdifferenz eine Dauer aufweist, die kürzer als die längste Dauer der Bildpotentialdifferenzen ist, ein Bildpunkt aus der Anzahl von Bildpunkten ist.

## Revendications

1. Ecran d'affichage électrophorétique (1) pour afficher une image comprenant:
- un milieu électrophorétique (5) comprenant des particules chargées (6);
- une pluralité d'éléments d'image (2);
- une première et une seconde électrode (3, 4) qui sont connexes à chaque élément d'image (2) pour recevoir une différence de potentiel; et
- des moyens d'entraînement,
les particules chargées (6) étant capables d'occuper des positions extrêmes près des électrodes (3, 4) et des positions intermédiaires au milieu d'entre des électrodes (3, 4), les moyens d'entraînement étant agencés pour commander la différence de potentiel de chaque élément d'image (2)
- de manière à être une différence de potentiel préréglée ayant une séquence de valeurs préréglées d'un signe alternatif et ayant une durée prédéterminée, chaque valeur préréglée ayant une sous-durée pour représenter une énergie qui est suffisante pour dégager, de leur position, des particules (6) étant présentes dans une desdites positions extrêmes mais qui est peu suffisante pour permettre que des particules (6) atteignent l'autre des positions extrêmes, et ensuite
- de manière à être une différence de potentiel d'image ayant une valeur et une durée réelle dans la gamme comprise entre une durée la plus courte et une durée la plus longue pour afficher l'image en amenant les particules (6) dans une desdites positions,
**caractérisé en ce que**
les moyens d'entraînement sont encore agencés de manière à commander, pour chaque élément d'image d'un certain nombre des éléments d'image (2) ayant des durées plus courtes des différences de potentiel d'image que la plus longue durée, la différence de potentiel préréglée afin d'obtenir une durée additionnelle qui est choisie dans une gamme comprise entre plus de zéro et égale à une différence entre la plus longue durée et la durée réelle de la différence de potentiel d'image.

2. Ecran d'affichage (1) selon la revendication 1, **caractérisé en ce que** les moyens d'entraînement sont encore agencés pour commander la durée additionnelle respective de manière à être une fonction décroissante de la durée réelle respective de la différence de potentiel d'image.

3. Ecran d'affichage (1) selon la revendication 2, **caractérisé en ce que** les moyens d'entraînement sont encore agencés pour commander la durée additionnelle respective de manière à être sensiblement égale à la différence entre la plus longue durée des différences de potentiel d'image et la durée réelle respective de la différence de potentiel d'image.

4. Ecran d'affichage (1) selon la revendication 1, **caractérisé en ce que** les moyens d'entraînement sont encore agencés pour commander les valeurs préréglées dans la séquence de manière à présenter subséquemment une valeur opposée.

5. Ecran d'affichage (1) selon la revendication 4, **caractérisé en ce que** les moyens d'entraînement sont encore agencés pour générer un nombre pair de valeurs préréglées.

6. Ecran d'affichage (1) selon la revendication 1, **caractérisé en ce que** les éléments d'image (2) sont interconnectés en deux ou en plusieurs groupes, des différences de potentiel préréglées ayant une polarité différente étant appliquées à des groupes différents.

7. Ecran d'affichage (1) selon la revendication 1, **caractérisé en ce que** pour chaque élément d'image (2) la première électrode comprend une électrode de données et la seconde électrode comprend une électrode de sélection et **en ce que** les moyens d'entraînement comprennent encore des premiers moyens de sous-entraînement pour appliquer un potentiel de sélection à l'électrode de sélection et des seconds moyens de sous-entraînement pour appliquer un potentiel de données à l'électrode de données.

8. Ecran d'affichage (1) selon la revendication 1, **caractérisé en ce que** la première électrode (3) de chaque élément d'image (2) est en cours d'être couplée à une électrode de données par le biais d'un élément de commutation, l'élément de commutation étant commandé par une électrode de sélection, et **en ce que** les moyens d'entraînement comprennent encore des premiers moyens de sous-entraînement pour appliquer des potentiels de sélection aux électrodes de sélection et des seconds moyens de sous-entraînement pour appliquer des potentiels de données aux électrodes de données.

9. Ecran d'affichage (1) selon la revendication 7 ou 8, **caractérisé en ce que** les électrodes de sélection ou les électrodes de données ou les deux qui sont connexes aux éléments d'image (2) sont interconnectées en deux groupes et **en ce que** les moyens d'entraînement sont encore agencés de manière à générer une première différence de potentiel préréglée ayant une première polarité pour le premier groupe et une seconde différence de potentiel préréglée ayant une seconde polarité étant opposée à la première polarité pour le second groupe.

10. Ecran d'affichage (1) selon la revendication 1, 2 ou 3, **caractérisé en ce que** chaque élément d'image (2) ayant une durée de la différence de potentiel d'image réelle qui est inférieure à la plus longue durée des différences de potentiel d'image est un du nombre des éléments d'image.
